# EUROPEAN PATENT APPLICATION

(11) **EP 2 042 030 A1**
(43) Date of publication of application: **01.04.2009**
(21) Application number: 08275058.9
(22) Date of filing: 26.09.2008
(51) Int. Cl.: A01G 9/10

(54) **Plant pot**

(30) Priority: 26.09.2007 GB 0718757
(71) Applicant: Hughes, Brian Samuel, Dundee DD2 1HX (GB); Henry, Kenneth, Balfron By Glasgow G63 0LE (GB)
(72) Inventor: Hughes, Brian Samuel, Dundee DD2 1HX (GB); Henry, Kenneth, Balfron By Glasgow G63 0LE (GB)
(74) Representative: Watson, Craig Simon

(57) **Abstract**

A plant pot (10) comprising a base (12) and at least one side wall (14), the base (12) and the side wall (14) together defining an at least one chamber (18) of fixed dimensions for receiving an at least one plant and a growing medium (22), wherein a plurality of apertures (16) are formed in the at least one side wall (14), each aperture (16) permitting passage of a root (36) of the at least one plant from the chamber (18) through the side wall (14) to an exterior of the plant pot (10). Plants, typically trees, are normally grown in such pots in the ground and their recovery for onward sale is facilitated by the use of such pots.

## Description

The present invention relates to a plant pot. In particular, but not exclusively, the present invention relates to a plant pot of a type suitable for use in the field growing of plants.

In the horticultural industry, it is common practice to 'field-grow' plants directly in the ground for a number of years and, when the plant has reached a sufficient or desired level of maturity, to transfer the plant into a pot for onward transport to a customer, and/or for display and sale in a retail outlet such as a garden centre. This growing method is particularly applicable to trees, which are relatively slow growing.

A significant problem with this growing method is that the plant roots, being unconstrained when field-grown, develop an extensive root network which is frequently damaged when the plant is dug-up for transfer to a pot. As a result, a significant number of field-grown plants die within a few days or weeks of being dug-up and transferred to a pot. The suitability of this growing method is also dependent to a great extent upon the sensitivity of the plant in question to such treatment, some plants being more sturdy and less likely to suffer permanent harm than others.

It is therefore amongst the objects of embodiments of the present invention to obviate or mitigate at least one of the foregoing disadvantages.

According to a first aspect of the present invention, there is provided a plant pot comprising a base and at least one side wall, the base and the side wall together defining an at least one chamber of fixed dimensions for receiving an at least one plant and a growing medium, wherein a plurality of apertures are formed in the at least one side wall, each aperture permitting passage of a root of the at least one plant from the chamber through the side wall to an exterior of the plant pot.

Typically an at least one plant and growing medium is supplied into the pot chamber, and the filled/partially filled pot is then located in a hole in the ground in a suitable location. Root growth through the apertures occurs, giving the plant access to nutrients and/or water. When the time comes to dig-up the plant, this is achieved simply by digging around the pot (if necessary) and lifting the pot up out of the ground. The roots which established by growing out through the apertures in the pot shear off and remain in the ground (although it is envisaged that a quantity of roots may have sufficient rigidity to resist shearing and thus may remain in place). In this fashion, a main root ball or clump of the plant, grown and held within the chamber, remains intact, reducing injury to the plant when compared to conventional field-growing techniques.

It will therefore be understood that providing a plant pot having an at least one side wall including such apertures permits the plant to grow and develop a root system extending from the chamber into the ground around the pot, so that the plant may access water and/or nutrients, but restricts growth of said roots such that shearing of the roots when the pot is removed from the ground does not result in a fatal damage to the plant. Additionally, a main root ball or clump formed within the pot chamber remains substantially intact during this process.

The plant pot may be adapted, in use, to be at least partly buried and thus to be at least partly located below ground level. The plant pot may be adapted to be located, in use, with the apertures below ground level.

The plant pot may be of a sufficient rigidity such that the pot defines the fixed dimension chamber in the absence of an at least one plant and growing medium, and may also be of sufficient rigidity such that the pot substantially retains its shape (and thus the dimensions of the chamber) following location of an at least one plant and growing medium in the chamber. This may facilitate location of the plant in the pot, and charging of the growing medium into the pot.

The apertures may be circular in cross-section, and may have a diameter in a range of 2mm to 5mm, inclusive. In a preferred embodiment the apertures may have a diameter in the range of 2.5mm to 3.5mm. In a more preferred embodiment, the apertures may have a diameter of about 3mm. Providing the apertures at a diameter of about 3mm has been found to offer particular advantages in terms of: permitting growth of a root of sufficient diameter to enable recovery of adequate levels of nutrients and/or water from the soil surrounding the pot; restricting growth of the root to an extent which would be likely to result in the root deforming and/or breaching a wall of the aperture and thus damaging the pot; restricting growth of the root to an extent that damage to said root does not result in a fatal injury to the plant when the pot is lifted from the ground; and in restricting growth of the root to an extent that a main root growth activity occurs within the pot chamber and thus that the plant develops a strong root ball or clump within the chamber.

Typically, in providing apertures within the above range and in particular at a 3mm diameter, the at least one plant develops a main root which extends through the growing medium towards an internal opening of an aperture. Further free growth of the root through the aperture is restricted by selection of the aperture diameter to be in the above range. A callous then forms on the root at a location adjacent the aperture internal opening, causing an extended root portion to be thrown from the callous through the aperture, the extended portion being of sufficiently small diameter to pass through the aperture and into soil surrounding the plant pot.

The apertures may extend around a perimeter or circumference of the plant pot, and/or may extend in a direction along a length of the side wall of the plant pot. At least some of the apertures may be arranged in arrays or patterns of apertures, and the shapes of the arrays or patterns may be selected to promote root growth.

The apertures may extend around the side wall of the plant pot. The apertures may extend upwards from the base along a vertical length of the side wall of the plant pot. The apertures may be evenly spaced in an array.

The volume may be in the range of 5 and 30 litres for example the plant pot may have an internal volume of 5, 7.5, 10, 15, 20, 25 or 30 litres.

The plant pot may have more than 100 apertures. The plant pot may have less than 1000 apertures, preferably less than 500 apertures.

In one embodiment a 7.5 litre plant pot has 164 apertures. In another embodiment a 10 litre plant pot has 180 apertures.

The plant pot may be circular in cross-section, or may be polygonal in cross-section and thus the plant pot may comprise a plurality of side walls. For example, the plant pot may be square in cross-section and thus may comprise four side walls, each side wall comprising a plurality of apertures.

A plurality of apertures may also be formed in the base of the plant pot, and the apertures in the base may be of similar dimensions and/or arranged in similar arrays or patterns as the apertures in the at least one side wall. The apertures in the base of the plant pot may be between 2 and 5 mm in diameter.

The apertures may be drilled or otherwise formed in the side wall of the plant pot. Alternatively, the plant pot may be manufactured including the apertures. For example, the plant pot may be of a plastics material and the pot may be moulded to include the apertures.

In alternative embodiments, apertures of alternative shapes and/or diameters or dimensions to that defined above may be provided.

It will be understood that references herein to plants should be taken to include, *inter alia*, trees, herbs, bushes/shrubs, grasses, perennial, biennial and annual plants and the like. In addition, it will be understood that references herein to a growing medium for plants should be taken to include naturally occurring and manufactured or synthesised mediums including, *inter alia*, soils, composted material, fertilisers and combinations thereof.

According to a second aspect of the present invention, there is provided a method of growing a plant comprising the steps of:
providing a plant pot comprising a base and at least one side wall, the base and the side wall together defining an at least one chamber of fixed dimensions;
locating a plant and a growing medium in the chamber of the plant pot; locating the plant pot containing the tree and the growing medium in a hole in the ground;
permitting root growth through a plurality of apertures formed in the side wall of the plant pot and into the ground surrounding the plant pot; and
when the plant has reached a desired level of maturity, digging-up the plant pot including the plant and the growing medium.

When the plant pot is dug-up, a majority or all of the roots which have grown through the apertures may be sheared and may remain in the ground.

The level of maturity may be between 2 and 6 years, such as 4 years.

An embodiment of the present invention will now be described, by way of example only, with reference to the following drawings, in which:
Fig. 1 is a perspective view of a plant pot in accordance with a preferred embodiment of the present invention;
Fig. 2 is a partial cross-sectional perspective view of the plant pot of Fig. 1 shown in use in the field-growing of a plant; and
Fig. 3 is a partial cross-sectional plan view of the plant pot of Fig. 1 showing a root system of the plant of Fig. 2 in more detail.

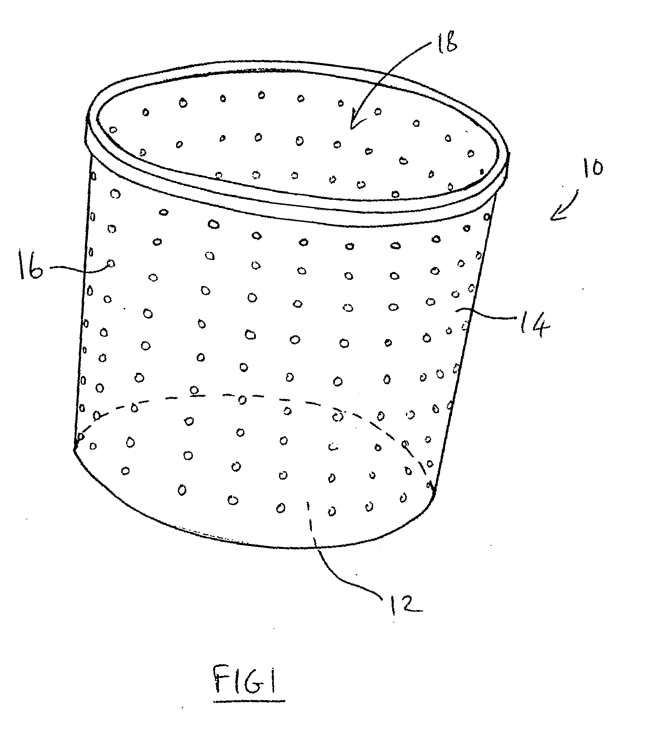

Turning firstly to Fig. 1, there is shown a perspective view of a plant pot, (or a container for a plant) in accordance with a preferred embodiment of the present invention, the plant pot indicated generally by reference numeral 10.

The plant pot 10 is circular in cross-section, and generally comprises a base 12 and a side wall 14. A plurality of apertures 16 are formed in the side wall 14 of the pot 10. In the illustrated embodiment, the plant pot 10 is of a plastics material of a type typically used in the manufacture of conventional plant pots, and the apertures 16 are formed in the side wall 14 using a suitable drill. However, it will be understood that the plant pot may be moulded including the apertures.

In the preferred embodiment shown, the apertures 16 are about 3mm in diameter, although other diameters may be selected, typically within the range of 2mm to 5mm, inclusive. As will be described below, however, forming the apertures with a diameter of about 3mm offers particular advantages in use of the pot 10. The apertures 16 extend around a circumference of the pot 10 side wall 14, as well as along the vertical length of the side wall 14.

The plant pot base 12 and side wall 14 together define a chamber 18 of fixed dimensions for receiving a plant and a growing medium for the plant, which will be described below. Providing the plant pot defining such a fixed dimension chamber 18 facilitates location of a plant and charging of a growing medium into the pot 10.

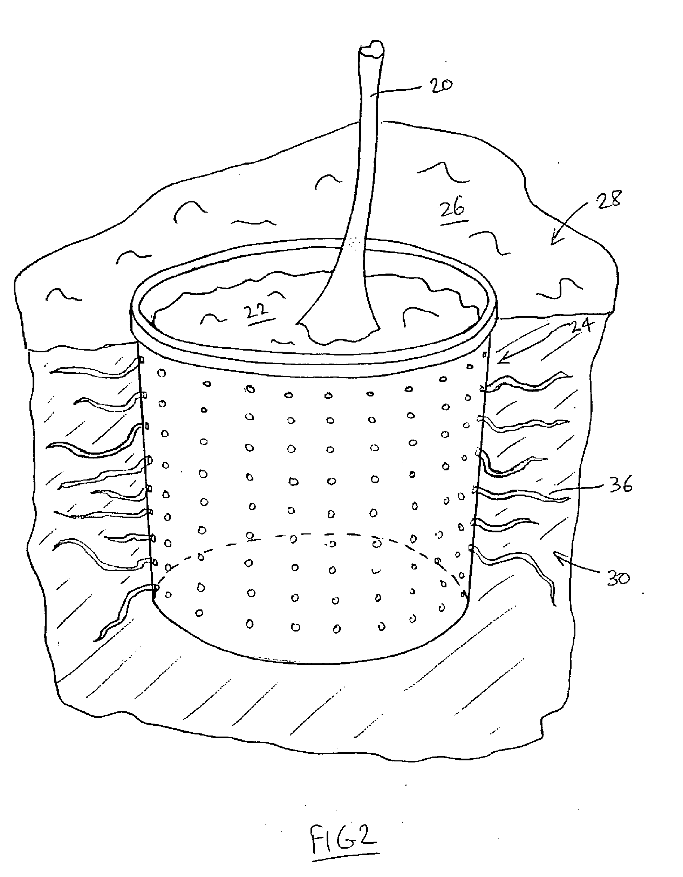

The plant pot 10 has a particular utility in the field- growing of plants, especially trees, which are relatively slow growing, and is shown in a field-growing situation in the partial cross-sectional perspective view of Fig. 2. A plant in the form of a tree 20 has been located in the chamber 18 of the pot 10, together with a suitable growing medium 22 (typically a balanced mixture of soil/compost/fertiliser). The filled pot 10 is then transported to a location in which the tree 20 is to be field-grown, although it will be understood that the pot 10 may be filled on-site. A hole 24 is dug in ground 26, and the filled pot 10 is located in the hole, and the space around the pot 10 back-filled.

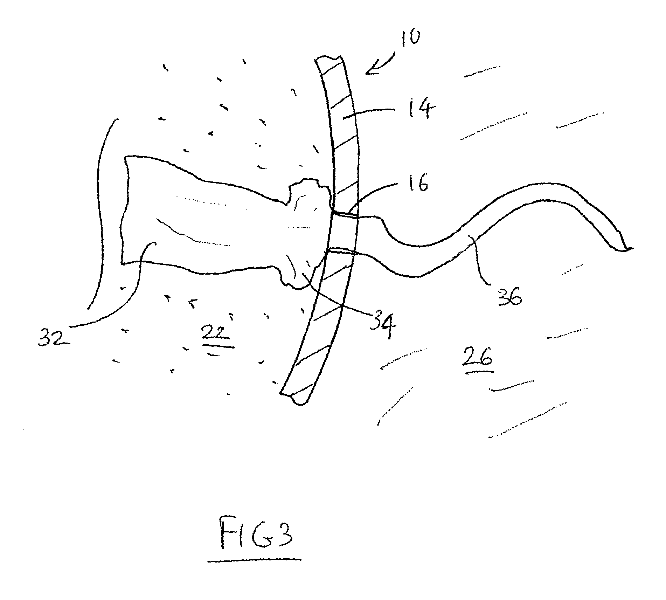

In Fig. 2, the soil in the area of ground 26 below a surface 28 level is shown in cross-section, to ease illustration of a root system 30 of the tree 20 which has developed over a period of time. Reference is also made to Fig. 3, which is a partial cross-sectional plan view of the pot 10 showing the root system 30 in more detail.

Over time, the tree 20 develops a main root ball or clump (not shown) within the chamber 18 of the pot 10. The tree 20, in seeking water and nutrients, also throws roots towards the apertures 16 in the pot side wall 14. By forming the apertures 16 to be of about 3mm diameter, growth of the roots through the apertures 16 is restricted. This is illustrated in Fig. 3, where a main root 32, thrown from the root ball or clump, has encountered an aperture 16. Initially, the root portion 32 attempts to force its way through the aperture 16, resulting in the formation of a callous 34. After a further time period in which the root portion 32 has found it impossible to grow and extend through the aperture 16, an extended root portion 36 shoots off from the callous 34 and passes through the aperture 16. This extended portion 36 passes into the ground 26 surrounding the pot 10, and facilitates recovery of water and nutrients from the ground 26, stimulating growth of the tree 20.

Careful selection of the aperture 16 diameter to be in the range of 2mm to 5mm and in particular about 3mm, ensures that the growth of the extended root portion 36 is restricted. In particular, the diameter of the root portion 36 is restricted such that the root portion does not deform the aperture 16. Additionally, in restricting root growth in this fashion, the root potion 36 is prevented from growing to a sufficiently large diameter that would both cause difficulties in subsequent transplantation of the tree 20, and which would cause potentially fatal injury to the tree 20 should the root portion 36 be damaged during transplantation. Indeed, selection of the aperture diameter as described above produces an extended root portion 36 which is specifically intended to shear off when the tree 20 is to be transplanted, this being achieved without fatal injury to the tree 20.

It will be appreciated that an extensive network of such extended root portions 36 forms over time, as shown in Fig. 2. When the tree 20 has reached a desired level of maturity, the entire filled plant pot 10 is dug-up from the ground 26. During this process, most or all of the extended root portions 36 shear off and remain in the ground. However, as described above, this is not fatal to the tree 20, and the main root ball or clump within the chamber 18 remains largely or completely intact. The pot 10 is then transported to a retail outlet such as a garden centre, and is maintained in the pot 10 for storage and display purposes. It will be appreciated, however, that the tree 20 in the filled pot 10 is suitable for direct sale to a customer following removal from the ground 26.

Various modifications may be made to the foregoing without departing from the spirit and scope of the present invention.

For example, the plant pot may define a plurality of chambers, each chamber being for receiving a respective plant. If desired, a plurality of plants may be located in the or each chamber.

The apertures may be arranged in alternative arrays or patterns, and the arrays or patterns may be selected to promote root growth.

The plant pot may be of alternative shape, and may be polygonal (for example, square) in cross-section.

Apertures may be provided in the base and may be sized similarly to the apertures in the side wall.

## Claims

1. A plant pot comprising a base and at least one side wall, the base and the side wall together defining an at least one chamber of fixed dimensions for receiving an at least one plant and a growing medium, wherein a plurality of apertures are formed in the at least one side wall, each aperture permitting passage of a root of the at least one plant from the chamber through the side wall to an exterior of the plant pot.

2. A plant pot as claimed in claim 1, wherein the apertures are circular in cross-section.

3. A plant pot as claimed in either preceding claim, wherein the diameter of the apertures is in the range of 2mm to 5mm.

4. A plant pot as claimed in any preceding claim, wherein the diameter of the apertures is about 3mm.

5. A plant pot as claimed in any preceding claim, wherein the apertures extend around the side wall of the plant pot.

6. A plant pot as claimed in any preceding claim, wherein the apertures extend upwards from the base along a vertical length of the side wall of the plant pot.

7. A plant pot as claimed in any preceding claim, wherein the apertures are evenly spaced in an array.

8. A plant pot as claimed in any preceding claim, wherein a plurality of apertures are formed in the base of the plant pot.

9. A plant pot as claimed in claim 8, wherein the apertures in the base are 2 - 5 mm in diameter.

10. A plant pot as claimed in any preceding claim, comprising a plurality of chambers, each chamber suitable to receive at least one plant.

11. A plant pot as claimed in any preceding claim, having an internal volume in the range of 5 and 30 litres.

12. A plant pot as claimed in any preceding claim, having more than 100 apertures.

13. A plant pot as claimed in any preceding claim, having less than 1000 apertures.

14. A method of growing a plant comprising the steps of:
providing a plant pot comprising a base and at least one side wall, the base and the side wall together defining an at least one chamber of fixed dimensions;
locating a plant and a growing medium in the chamber of the plant pot; locating the plant pot containing the plant and the growing medium in a hole in the ground;
permitting root growth through a plurality of apertures formed in the side wall of the plant pot and into the ground surrounding the plant pot; and
when the plant has reached a desired level of maturity, digging-up the plant pot including the plant and the growing medium.

15. A method as claimed in claim 14, wherein the level of maturity is between 2 and 6 years.
